# EUROPÄISCHE PATENTANMELDUNG

(11) **EP 4 527 203 A1**
(43) Veröffentlichungstag der Anmeldung: **26.03.2025**
(21) Anmeldenummer: 23199050.8
(22) Anmeldetag: 22.09.2023
(51) Int. Cl.: A21C 9/08, A21C 15/00, A21C 15/02, B65G 17/12, B65G 17/34, B65G 21/20, B65G 47/52, F25D 25/04

(54) **WAFFELBLATTFÖRDERER**

(71) Anmelder: Bühler Food Equipment GmbH, 2100 Leobendorf (AT)
(72) Erfinder: Reithner, Jürgen, 3562 Schönberg (AT); Theimer, Rene, 2112 Lerchenau (AT)
(74) Vertreter: Puchberger & Partner Patentanwälte

(57) **Zusammenfassung**

Waffelblattförderer (1) und Verfahren zum Transport von Waffelblättern durch eine Kühl- oder Konditionierstation (2) einer Anlage zur Herstellung von Waffelprodukten, umfassend mehrere Fächer (3), mehrere paarweise angeordnete Verbindungsleisten (4) mit nach innen weisenden Nuten (5) und mit lösbaren Hakenverbindungen (6), die die Fächer (3) vor einem Herausziehen oder Herausfallen aus Nuten (5) schützen, eine Fördervorrichtung (7), die die Verbindungsleisten (4) und die in die Verbindungsleisten (4) eingesteckten Fächer (3) entlang einer Förderrichtung (8) und insbesondere entlang einer geschlossenen Kontur bewegt, und Führungsleisten (9), die die Verbindungsleisten (4) an deren Außenseiten (10) entlang der Förderrichtung (8) führen, wobei mindestens eine der Führungsleisten (9) einen Serviceabschnitt (11) aufweist, in dem sie über eine Bewegungsvorrichtung (12) derart nach außen bewegt und insbesondere weggeklappt werden kann, dass eine Bewegung der in diesem Bereich positionierten Verbindungsleisten (4) nach außen freigegeben und dadurch ein Lösen der Hakenverbindung (6) und eine Entnahme des Fachs (3) ermöglicht ist.

## Beschreibung

Die Erfindung betrifft einen Waffelblattförderer zum Transport von Waffelblättern durch eine Kühl- oder Konditionierstation sowie ein diesbezügliches Verfahren und eine Führungsleistenanordnung.

Bei der Herstellung von Backprodukten, insbesondere bei der Herstellung von mehrlagigen, schichtförmig aufgebauten Waffelprodukten, die mit Zwischenschichten aus einer essbaren Creme versehen oder beschichtet sind, ist es oft notwendig, die Backprodukte bzw. die Backzwischenprodukte zu kühlen, zu konditionieren oder in einer anderen Form zu behandeln.

Beispielsweise werden bei der Herstellung von Waffelschnitten einzelne Waffelblätter, die aus einer industriellen Herstellungsanlage zum Backen von Waffelblättern kommen, an Ihrer Oberseite mit einer essbaren Creme versehen. Diese essbare Creme ist beispielsweise eine Schokolade- und/oder Haselnusscreme, die aufgewärmt wird, um sie effizient auf die Waffelblätter auftragen zu können. Um nun mehrere derartiger mit Creme versehener Waffelblätter stapeln zu können, ist es meist notwendig, die aufgetragene Creme ausreichend abzukühlen. Auch die Waffelblätter von frisch gebildeten, noch warmen und daher weichen, Waffelblöcken müssen gegebenenfalls gekühlt werden.

Werden Waffelprodukte mit einem Überzug aus einem aushärtenden Überzug wie beispielsweise aus Schokolade versehen, so ist es wichtig, die Backzwischenprodukte zu konditionieren und dadurch den Feuchtegehalt einzustellen.

Moderne Herstellungsanlagen zur Bildung derartiger Waffelprodukte arbeiten in der Regel kontinuierlich oder intermittierend, wobei ein ständiger Produktfluss aufrechterhalten werden muss. Um nun ausreichend Zeit für die Kühlung bzw. Konditionierung der Zwischenprodukte zu haben, ist es bekannt, Waffelblätter, die gegebenenfalls zu Waffelblöcken zusammengesetzt sind, auf Fächern aufliegend vertikal zu befördern. Diese Fächer sind in der Regel Teile von vertikal ausgerichteten Waffelblattförderern. Hierbei wird eine Vielzahl an Fächern, beispielsweise 100 bis 300 Fächer, durch den Waffelblattförderer bewegt.

Bei der industriellen Herstellung von Lebensmittelprodukten ist die Reinigung der Anlagenteile von großer Wichtigkeit. In der Regel soll die Reinigung so rasch und effizient wie möglich erfolgen, damit der Produktionsfluss so kurz wie möglich unterbrochen wird. Dies hat direkten Einfluss auf die Effizienz der Herstellungsanlage bzw. der Station, die gereinigt werden soll.

Bei herkömmlichen Stationen mit auf Fächern aufliegenden Waffeln ist die Reinigung mit einem sehr hohen Aufwand verbunden. So muss die Station meist gestoppt werden, sodass der Waffelblattförderer auseinander gebaut und die Fächer entnommen werden können. In weiterer Folge können die Fächer und der Innenraum der Station gereinigt werden und anschließend wird die Station wieder zusammengebaut. Dies ist mit einem großen Aufwand verbunden und erfordert darüber hinaus speziell ausgebildetes Servicepersonal.

Aufgabe der Erfindung ist es nun, die Nachteile des Standes der Technik zu überwinden und insbesondere einen Waffelblattförderer zum Transport von Waffelblättern durch eine Kühl- oder Konditionierstation zu schaffen, dessen Effizienz und insbesondere dessen Reinigbarkeit verbessert ist.

Die erfindungsgemäße Aufgabe wird insbesondere durch die Merkmale der Patentansprüche gelöst.

Die Erfindung betrifft insbesondere einen Waffelblattförderer zum Transport von Waffelblättern durch eine Kühl- oder Konditionierstation einer Anlage zur Herstellung von Waffelprodukten, umfassend eines oder mehrere der folgenden Merkmale:
- mehrere Fächer zur Aufnahme bzw. Anlage und zum Transport der Waffelblätter,
- mehrere Verbindungsleisten mit, insbesondere paarweise, nach innen weisenden Nuten zur Halterung der Fächer und mit lösbaren Hakenverbindungen, die die Fächer vor einem Herausziehen oder Herausfallen aus den Nuten schützen,
- eine Fördervorrichtung, die die Verbindungsleisten und die in die Verbindungsleisten eingesteckten Fächer entlang einer Förderrichtung und insbesondere entlang einer geschlossenen Kontur bewegt,
- Führungsleisten, die die Verbindungsleisten an deren Außenseiten entlang der Förderrichtung derart führen, dass der Bewegungsspielraum der Verbindungsleisten nach außen durch die Führungsleisten, und bevorzugt nach innen durch die eingesteckten Fächer, eingeschränkt ist.

Die Verbindungsleisten sind bevorzugt paarweise angeordnet. Sie halten die Fächer dadurch gegebenenfalls beidseitig in ihren Nuten.

Bevorzugt weist mindestens eine der Führungsleisten einen Serviceabschnitt auf, in dem sie über eine Bewegungsvorrichtung derart nach außen bewegt und insbesondere weggeklappt werden kann, dass eine Bewegung der in diesem Bereich positionierten Verbindungsleisten nach außen freigegeben und dadurch ein Lösen der Hakenverbindung und eine Entnahme des Fachs ermöglicht ist. Die Bewegungsvorrichtung ist Teil des Waffelblattförderers also umfasst der Waffelblattförderer die Bewegungsvorrichtung.

Bevorzugt ist vorgesehen, dass die Bewegungsvorrichtung und die Hakenverbindung werkzeuglos betätigbare Vorrichtungen zur werkzeuglosen Entnahme der Fächer sind.

Gegebenenfalls sind entlang der Fördervorrichtung bzw. entlang deren Bewegungsrichtung nacheinander eine Vielzahl an paarweise angeordneten Verbindungsleisten vorgesehen, die jeweils ein Fach tragen können.

Gegebenenfalls ist vorgesehen, dass sich der Serviceabschnitt entlang der Bewegungsrichtung über mehrere Paare von Verbindungsleisten erstreckt und dadurch das Lösen der Hakenverbindungen mehrerer Fächer bei stillstehender Fördervorrichtung ermöglicht.

Gegebenenfalls umfasst die Fördervorrichtung zwei parallel zueinander verlaufende und angetriebene endlose Fördermittel wie beispielsweise Förderketten oder Förderriemen.

Gegebenenfalls ist die eine Verbindungsleiste eines Paars von Verbindungsleisten zur Halterung eines Fachs an dem einen Fördermittel und die andere Verbindungsleiste des Paars von Verbindungsleisten an dem anderen Fördermittel angebracht.

Gegebenenfalls ist vorgesehen, dass die Verbindungsleisten, zur Ermöglichung der Lösung der Hakenverbindungen durch die Bewegung der Verbindungsleisten nach außen, über ein Schwenkgelenk mit der Fördervorrichtung oder deren Fördermittel gekoppelt ist.

Gegebenenfalls ist vorgesehen, dass die Fördervorrichtung oder deren Fördermittel, an dem die Verbindungsleisten angebracht sind, zur Ermöglichung der Lösung der Hakenverbindungen durch die Bewegung der Verbindungsleisten nach außen, torsionsbeweglich ausgebildet sind.

Gegebenenfalls ist vorgesehen, dass die Schwenk- bzw. Torsionsachse, um die die Verbindungsleisten verschwenkt werden können, parallel zur Förderrichtung verläuft.

Gegebenenfalls ist vorgesehen, dass die Fördervorrichtung einen ersten Förderabschnitt aufweist, in dem die Verbindungsleisten im Wesentlichen parallel und beabstandet übereinander aufwärts befördert werden und die Förderrichtung im Wesentlichen senkrecht verläuft.

Gegebenenfalls ist vorgesehen, dass die Fördervorrichtung einen zweiten Förderabschnitt aufweist, in dem die Verbindungsleisten im Wesentlichen parallel und beabstandet übereinander abwärts befördert werden und die Förderrichtung im Wesentlichen senkrecht verläuft.

Gegebenenfalls ist vorgesehen, dass die Fördervorrichtung einen ersten Umlenkabschnitt aufweist, in dem die Verbindungsleisten von dem ersten Förderabschnitt auf den zweiten Förderabschnitt umgelenkt werden.

Gegebenenfalls ist vorgesehen, dass die Fördervorrichtung einen zweiten Umlenkabschnitt aufweist, in dem die Verbindungsleisten von dem zweiten Förderabschnitt wieder auf den ersten Förderabschnitt umgelenkt werden.

Gegebenenfalls ist vorgesehen, dass der Serviceabschnitt bevorzugt im ersten Förderabschnitt und/oder im zweiten Förderabschnitt vorgesehen ist.

Gegebenenfalls ist eine Verschiebevorrichtung vorgesehen, die die Fächer entlang der Nuten der Verbindungsleisten und quer zur Förderrichtung von einem Förderabschnitt der Fördervorrichtung, insbesondere vom ersten Förderabschnitt zum anderen Förderabschnitt, insbesondere in den zweiten Förderabschnitt verschiebt.

Gegebenenfalls ist vorgesehen, dass die Hakenverbindungen derart ausgestaltet sind, dass sie in ihrer verhakten Stellung ein Entfernen der Fächer, insbesondere formschlüssig, nach außen verhindern aber ein Verschieben der Fächer von einem Förderabschnitt zum anderen erlauben.

Gegebenenfalls ist vorgesehen, dass die Hakenverbindungen je zwei Hakenenlemente umfassen, die durch Relativbewegung entlang einer Hakenrichtung miteinander verhakt oder gelöst werden können.

Gegebenenfalls ist ein Hakenenlement einer Hakenverbindung am Fach und das andere Hakenenlement derselben Hakenverbindung an jener Verbindungsleiste vorgesehen, in dessen Nut das entsprechende Fach eingesteckt ist.

Gegebenenfalls sind pro Fach zwei Hakenverbindungen vorgesehen, wobei die beiden Hakenverbindungen eines Fachs im Bereich der Verbindungsleisten vorgesehen sind, in deren Nuten das entsprechende Fach eingesteckt ist.

Insbesondere betrifft die Erfindung eine Kühl- oder Konditionierstation einer Anlage zur Herstellung von Waffelprodukten, umfassend einen Kühl- oder Konditionierbereich und einen Waffelblattförderer, der Waffelblätter durch den Kühl- oder Konditionierbereich befördert.

Gegebenenfalls betrifft die Erfindung eine Führungsleistenanordnung für einen Waffelblattförderer, umfassend die Führungsleisten mit dem Serviceabschnitt und die Bewegungsvorrichtung. Durch Nachrüsten dieser Führungsleistenanordnung kann ein herkömmlicher Waffelblattförderer verbessert werden.

Insbesondere betrifft die Erfindung ein Verfahren zum Betrieb und bevorzugt zur Entnahme von Fächern eines Waffelblattförderers, umfassend folgende Schritte:
- nach außen Bewegen und insbesondere wegklappen mindestens einer der Führungsleisten in dem Serviceabschnitt, sodass eine Bewegung der in diesem Bereich positionierten Verbindungsleisten nach außen freigegeben wird,
- Lösen der Hakenverbindung durch nach außen Bewegen mindestens einer Verbindungsleiste,
- und Entnahme des Fachs.

Gegebenenfalls ist vorgesehen, dass die Fördervorrichtung zuerst angehalten wird, und anschließend all jene Fächer bei stillstehender Fördervorrichtung entnommen werden, die sich im Serviceabschnitt befinden.

Gegebenenfalls betrifft die Erfindung ein Verfahren zum Nachrüsten eines Waffelblattförderers zum Transport von gegebenenfalls zu Waffelblöcken zusammengesetzten Waffelblättern durch eine Kühl- oder Konditionierstation einer Anlage zur Herstellung von Waffelprodukten, wobei mindestens eine der Führungsleisten mit einen Serviceabschnitt versehen wird, der über eine Bewegungsvorrichtung derart nach außen bewegt und insbesondere weggeklappt werden kann, dass eine Bewegung der in diesem Bereich positionierten Verbindungsleisten nach außen freigegeben und dadurch ein Lösen der Hakenverbindung und eine Entnahme des Fachs ermöglicht ist.

Bevorzugt umfasst die Fördervorrichtung mindestens ein Fördermittel, wie beispielsweise Förderketten oder Förderriemen, und einen Antrieb zum Antreiben des Fördermittels und damit zum Bewegen der Fächer.

Die Erfindung betrifft gegebenenfalls eine Kühlstation zur Kühlung von Waffelblättern, umfassend:
- einen Kühlbereich zur Kühlung der Waffelblätter,
- einen sich durch den Kühlbereich erstreckenden Waffelblattförderer zum Transport der Waffelblätter.

Die Erfindung betrifft gegebenenfalls eine Konditionierstation zur Konditionierung von Waffelblättern, umfassend:
- einen Konditionierbereich zur Einstellung des Feuchtegehalts der Waffelblätter,
- einen sich durch den Konditionierbereich erstreckenden Waffelblattförderer zum Transport der Waffelblätter.

Die Waffelblätter können mit einer Creme versehen und/oder mit einem Überzug überzogen und/oder zu einem Waffelblock zusammengesetzt sein.

Waffelblöcke sind mehrlagige Waffelzwischenprodukte, die mehrere Waffelblattschichten und zwischen den Schichten angeordnete Cremeschichten aufweisen. Die Cremeschichten werden beispielsweise aus einer Nuss- und/oder Schokoladecreme gebildet. Derartige Waffelblöcke werden nach dem Stapeln und Kühlen in der Regel geschnitten, verpackt und als Schnittenprodukte verkauft.

Gegebenenfalls ist eine Verschiebevorrichtung vorgesehen, die die Waffelblätter quer zum Verlauf des Waffelblattförderers von einem Förderabschnitt des Waffelblattförderers, insbesondere vom ersten Förderabschnitt zum anderen Förderabschnitt, insbesondere in den zweiten Förderabschnitt verschiebt.

Gegebenenfalls verschiebt die Verschiebevorrichtung die Waffelblätter bzw. Waffelblöcke quer zum Verlauf des Waffelförderers vom aufwärts befördernden in den abwärts befördernden Förderabschnitt.

Gegebenenfalls ist vorgesehen, dass die Verschiebevorrichtung die Waffelblätter im Endbereich eines Förderabschnitts in den Anfangsbereich des anderen Förderabschnitts transportiert.

Gegebenenfalls ist vorgesehen, dass die Verschiebevorrichtung die Waffelblätter im Endbereich des ersten Förderabschnitts in den Anfangsbereich des zweiten Förderabschnitts transportiert.

Gegebenenfalls ist vorgesehen, dass der Waffelblattförderer zum Transport von einseitig mit einer Creme versehenen Waffelblättern eingerichtet ist und die Verschiebevorrichtung derart ausgestaltet ist, dass die Waffelblätter beim Transport durch die Kühlstation einzeln und stets mit ihrer mit der Creme versehenen Seite nach oben weisend transportiert werden.

Gegebenenfalls ist vorgesehen, dass der erste Förderabschnitt und der zweite Förderabschnitt im Wesentlichen vertikal und parallel nebeneinander verlaufen.

Gegebenenfalls ist vorgesehen, dass die Verschiebevorrichtung dazu eingerichtet ist, bei einem Schiebevorgang mindestens ein Waffelblatt, bevorzugt zwei, drei, vier, fünf oder mehr Waffelblätter von einem Förderabschnitt in den anderen Förderabschnitt zu verschieben.

Gegebenenfalls ist vorgesehen, dass am Waffelblattförderer mehrere im Wesentlichen waagrecht verlaufende Fächer angebracht sind, auf denen die Waffelblätter liegend transportiert werden. Gegebenenfalls ist vorgesehen, dass jedes Fach nur ein Waffelblatt oder einen Waffelblock transportiert.

Gegebenenfalls ist vorgesehen, dass die Verschiebevorrichtung beim Transport der Waffelblätter von einem Förderabschnitt in den anderen Förderabschnitt die Fächer samt den auf den Fächern aufgelagerten Waffelblättern bzw. Waffelblöcken verschiebt.

Gegebenenfalls ist vorgesehen, dass der Waffelblattförderer mehrere Verbindungsleisten zur Halterung der Fächer an der Fördervorrichtung aufweist,
- wobei die Verbindungsleisten bevorzugt derart ausgestaltet sind, dass sie im Bereich der Verschiebevorrichtung eine Verschiebung der Fächer quer zum Verlauf der Fördervorrichtung von einer Verbindungsleiste des einen Förderabschnitts in eine Verbindungsleiste des anderen Förderabschnitts ermöglichen.

Gegebenenfalls ist eine Hakenverbindung vorgesehen, die ein Herausfallen der Fächer aus den Verbindungsleisten verhindert aber eine Verschiebung der Fächer durch die Verschiebevorrichtung ermöglicht.

Gegebenenfalls ist vorgesehen, dass die Hakenverbindung zur Entnahme eines Fachs lösbar, insbesondere werkzeuglos lösbar, ausgebildet ist.

Gegebenenfalls ist vorgesehen, dass die Verbindungsleisten im ersten Förderbereich und im zweiten Förderbereich im Wesentlichen waagrecht verlaufende, schienen- oder nutförmige Führungen umfassen.

Gegebenenfalls ist vorgesehen, dass im Bereich der Verschiebevorrichtung, zwischen dem ersten Förderabschnitt und dem zweiten Förderabschnitt, eine Führungsvorrichtung vorgesehen ist, die die Fächer beim Verschiebevorgang jeweils von der Verbindungsleiste des einen Förderabschnitts Richtung und/oder in die Verbindungsleiste des anderen Förderabschnitts führt.

Gegebenenfalls ist vorgesehen, dass die Fächer jeweils einen oder mehrere fingerförmig nach außen ragende Fachabschnitte aufweisen, die im Übergabebereich und/oder im Abnahmebereich zwischen ein oder mehrere Förderelemente greifen, um ein Waffelblatt aufzunehmen oder abzulegen.

Insbesondere betrifft die Erfindung ein Verfahren zur Kühlung und/oder Konditionierung von Waffelblättern, die gegebenenfalls mit einer Creme versehen und/oder zu Waffelblöcken zusammengesetzt sind, insbesondere in einer erfindungsgemäßen Kühlstation, umfassend folgende Schritte:
- Transportieren von Waffelblättern in einem ersten Förderabschnitt eines Waffelblattförderers in eine erste Richtung entlang einer Hochachse,
- danach, Transportieren der Waffelblätter in einem zweiten Förderabschnitt des Waffelblattförderers in eine zweite Richtung entlang einer Hochachse, die der ersten Richtung im Wesentlichen entgegengesetzt ist,
- Kühlen bzw. Konditionieren der Waffelblätter während des Transports entlang des Waffelblattförderers.

Insbesondere sind die Kühlstation, die Konditionierstation und das Verfahren dazu geeignet und/oder eingerichtet, mit einer Creme versehene Waffelblätter, beispielsweise einseitig mit einer Creme versehene Waffelblätter oder zu einem Waffelblock zusammengesetzte mit einer Creme versehene Waffelblätter, zu kühlen bzw. zu konditionieren.

Bevorzugt werden die Waffelblätter, die gegebenenfalls mit einer Creme versehen und/oder zu Waffelblöcken zusammengesetzt sind, von einer Verschiebevorrichtung quer zum Verlauf des Waffelblattförderers vom ersten Förderabschnitt in den zweiten Förderabschnitt verschoben.

Gegebenenfalls ist vorgesehen, dass die Waffelblätter beim Transport durch die Kühlstation bzw. die Konditionierstation einzeln und stets mit ihrer mit der Creme versehenen Seite nach oben transportiert werden.

Gegebenenfalls ist vorgesehen, dass der Waffelblattförderer angehalten wird, sobald sich die gewünschte Anzahl an Waffelblättern im Bereich der Verschiebevorrichtung befindet, dass die Verschiebevorrichtung in einem Verschiebevorgang das Waffelblatt oder die Waffelblätter bei angehaltenem Waffelblattförderer vom ersten Förderabschnitt in den zweiten Förderabschnitt verschiebt, und dass der Waffelblattförderer anschließend weiterbewegt wird um weitere Waffelblätter in den Verschiebebereich zu befördern.

Gegebenenfalls ist vorgesehen, dass die Waffelblätter von der Verschiebevorrichtung waagrecht verschoben werden.

Gegebenenfalls ist vorgesehen, dass die Verschiebevorrichtung bei einem Schiebevorgang mindestens ein Waffelblatt, bevorzugt zwei, drei, vier, fünf oder mehr Waffelblätter von einem Förderabschnitt in den anderen Förderabschnitt verschiebt.

Gemäß einer bevorzugten Ausführungsform ist vorgesehen, dass die Waffelblätter an den Waffelblattförderer übergeben werden, anschließend im ersten Förderabschnitt des Waffelblattförderers nach oben befördert werden, danach im zweiten Förderabschnitt des Waffelblattförderers nach unten befördert werden und dabei gekühlt und/oder konditioniert werden. Grundsätzlich kann jedoch alternativ auch vorgesehen sein, dass die Waffelblätter zuerst an einen zweiten Förderabschnitt des Waffelblattförderers übergeben werden, der die Waffelblätter nach unten fördert und dass danach die Waffelblätter in dem ersten Förderabschnitt nach oben gefördert werden.

Gegebenenfalls ist der Waffelblattförderer in allen Ausführungsformen ein Vertikalförderer.

Bevorzugt ist vorgesehen, dass die, gegebenenfalls mit der Creme versehenen, Waffelblätter während der Bewegung entlang oder durch den Waffelblattförderer gekühlt bzw. konditioniert werden.

Insbesondere ist vorgesehen, dass der Waffelblattförderer zumindest teilweise innerhalb eines Gehäuses vorsehen ist.

Im Falle der speziellen Ausgestaltung mit einer Verschiebevorrichtung können die Waffelblätter stets mit ihrer mit Creme versehenen Seite nach oben weisend transportiert werden.

Bevorzugt ist vorgesehen, dass der erste Förderabschnitt und der zweite Förderabschnitt im Wesentlichen vertikal und parallel nebeneinander verlaufen. Alternativ kann jedoch auch vorgesehen sein, dass die Förderabschnitte schräg nach oben oder nach unten verlaufen.

Bevorzugt ist vorgesehen, dass die Verschiebevorrichtung mindestens ein Waffelblatt, bevorzugt zwei, drei, vier, fünf oder mehr Waffelblätter von einem Förderabschnitt in den anderen Förderabschnitt verschiebt. Insbesondere werden zur Verschiebung der Waffelblätter das oder die Fächer von der Verschiebevorrichtung verschoben.

Der Transport der Waffelblätter im ersten Förderabschnitt und/oder im zweiten Förderabschnitt erfolgt bevorzugt geradlinig, insbesondere vertikal. Die Waffelblätter werden beim Transport im ersten Förderabschnitt und/oder im zweiten Förderabschnitt bevorzugt waagrecht gehalten.

Die Verschiebevorrichtung kann beispielsweise einen Antrieb, insbesondere einen Linearantrieb wie eine Servo-Linearachse, eine Kugelumlaufspindel, eine Zahnstangenachse, einen Elektrozylinder- oder Antrieb, einen Hydraulikzylinder einen Pneumatikzylinder oder einen ähnlichen Antrieb umfassen, der über einen Schiebebalken auf die Fächer wirkt. Der Antrieb der Verschiebevorrichtung ist bevorzugt mit der Steuerung des Waffelblattförderers gekoppelt, um den Verschiebevorgang dann auszuführen, wenn der Waffelblattförderer in der richtigen Position angehalten ist.

Bevorzugt ist vorgesehen, dass die Waffelblätter mit ihrer nach oben weisenden Cremeseite liegend auf den Fächern transportiert werden. Bevorzugt umfasst der Waffelblattförderer eine Vielzahl an Fächern. Auf jedem Fach wird bevorzugt nur ein einziges Waffelblatt oder ein zusammengesetzter Waffelblock befördert.

Bevorzugt ist vorgesehen, dass im ersten Umlenkabschnitt und im zweiten Umlenkabschnitt keine Waffelblätter auf den Fächern angeordnet sind. Insbesondere werden die Waffelblätter vor den Umlenkbereichen entweder durch die Verschiebevorrichtung verschoben, oder im Abnahmebereich von den Fächern abgenommen. Bevorzugt ist der Übergabebereich nach einem Umlenkabschnitt angeordnet. Alternativ können Waffelblätter aber auch in zumindest einem Umlenkabschnitt transportiert und dabei gegebenenfalls verschwenkt werden.

Bevorzugt ist vorgesehen, dass die Fächer jeweils ein oder mehrere fingerförmig nach außen ragende Fachabschnitte aufweisen. Diese fingerförmigen Fachabschnitte sind dazu geeignet und/oder eingerichtet, die Waffelblätter von einem Riemenförderer zur Zuführung der Waffelblätter abzunehmen und/oder die Waffelblätter auf einen Riemenförderer zum Abtransport der Waffelblätter abzulegen. Insbesondere sind Riemenförderer vorgesehen, die an ihren dem Waffelblattförderer zugeordneten bzw. zugewandten Enden fingerförmige Förderfortsätze umfassen. Die fingerförmigen Fachabschnitte ragen zwischen die fingerförmigen Fortsätze der Riemenförderer und werden kammartig durch diese hindurch bewegt, um die Waffelblätter abzunehmen und/oder abzulegen.

Gegebenenfalls weisen die Fächer einen zentralen Steg auf, von dem beidseitig fingerförmige Fachabschnitte abstehen. Insbesondere kann es notwendig sein, beidseitig abstehende Fachabschnitte vorzusehen, da die Fächer von einem Förderabschnitt in den anderen verschoben werden und daher beidseitig mit fingerförmigen Fachabschnitten versehen sein müssen.

Ein exemplarisches Verfahren zur Kühlung von einseitig mit einer Creme versehener Waffelblätter kann insbesondere wie folgt ablaufen:
Die einseitig mit einer Creme versehenen Waffelblätter werden über eine Fördervorrichtung der Kühlstation zugeführt. Gegebenenfalls wird jedes Waffelblatt im Bereich der Kühlstation angehalten. In weiterer Folge wird das Waffelblatt an den Waffelblattförderer übergeben. Dies geschieht insbesondere dadurch, dass fingerförmig nach außen ragende Fachabschnitte das Waffelblatt von unten greifen und von dem Riemenförderer abheben. In weiterer Folge wird das Waffelblatt mit der nach oben weisenden Cremeschichte entlang des Waffelblattförderers bewegt. Insbesondere wird es entlang zweier Förderabschnitte bewegt, wobei ein Förderschnitt ein nach oben verlaufender Förderabschnitt und ein weiterer Förderabschnitt ein nach unten verlaufender Förderabschnitt ist. Insbesondere durch diese Anordnung ist eine platzsparende und effiziente Kühlung möglich.

Um zu verhindern, dass die Waffelblätter am oberen Umlenkpunkt, insbesondere im Umlenkbereich des Waffelblattförderers, um 180° gewendet werden, kann das Verfahren bevorzugt folgende Schritte umfassen:
Im Bereich einer Verschiebevorrichtung werden die Waffeln von einem Förderabschnitt auf den anderen Förderabschnitt verschoben. Dies geschieht vor dem Umlenkabschnitt. Die Waffelblätter werden quer zum Verlauf des Waffelblattförderers und bevorzugt waagrecht verschoben. Dadurch können die Waffelblätter stets mit ihrer mit der Creme versehenen Seite nach oben durch den Kühlbereich befördert werden. Die Waffelblätter werden vor dem Umlenkbereich von einem Förderabschnitt zum anderen transportiert, sodass im Umlenkabschnitt auf den Fächern keine Waffelblätter aufliegen oder angeordnet sind.

In weiterer Folge werden die Waffelblätter entlang des Waffelblattförderers weiterbefördert und dadurch weiter gekühlt.

Die Waffelblätter werden weiter zu einem Abnahmebereich befördert. Dort werden die Waffelblätter bevorzugt auf eine Fördervorrichtung abgelegt und weiter abtransportiert.

Bevorzugt ist vorgesehen, dass der Waffelblattförderer stillsteht bzw. unbewegt bleibt, wenn die Verschiebevorrichtung die Waffelblätter quer zum Verlauf des Waffelblattförderers verschiebt.

Analog zu dieser Kühlung kann alternativ oder zusätzlich eine Konditionierung erfolgen.

Bei der Reinigung bzw. Wartung kann wie folgt vorgegangen werden:
Im Regelbetrieb werden Waffelblätter von dem Waffelblattförderer transportiert. Die Waffelblätter können je nach Anwendung einzeln, gestapelt oder mit einer Creme versehen sein. Die Waffelblätter liegen beim Transport auf Fächern auf, um sie beispielsweise durch einen Kühlraum oder einen Konditionierraum zu befördern. Dabei kann es zu Verschmutzungen der Fächer und der Vorrichtung kommen.

Um die Vorrichtung zu reinigen, wird bevorzugt die Übergabe von Waffelblättern an den Waffelblattförderer gestoppt, bis dieser keine Waffeln mehr transportiert. In weiterer Folge wird auch die Betätigung des Waffelblattförderers selbst gestoppt, sodass die Fächer stillstehen. In einem nächsten Schritt kann die Bewegungsvorrichtung betätigt werden, sodass die Führungsleisten im Serviceabschnitt nach außen bewegt und insbesondere weggeklappt werden können. Die Führungsleisten führen die Verbindungsleisten an ihrer Außenseite, sodass eine Bewegung der Verbindungsleisten nach außen verhindert ist. Wird jedoch die Führungsleiste im Serviceabschnitt über die Bewegungsvorrichtung nach außen bewegt, so ist die Führung der Verbindungsleisten in diesem Bereich freigegeben und die Verbindungsleisten können nach außen geschwenkt bzw. bewegt werden. Durch diese Bewegung der Verbindungsleisten kann die Hakenverbindung gelöst werden. Dadurch kann das Fach entnommen werden. In allen Ausführungsformen kann die Entnahme der Fächer werkzeuglos erfolgen. Bevorzugt können die Führungsleisten, die Verbindungsleisten und die Hakenverbindungen werkzeuglos betätigt werden.

Bevorzugt erstreckt sich der Serviceabschnitt über mehrere übereinander bzw. entlang der Bewegungsrichtung angeordnete Verbindungsleisten bzw. Fächer. Dadurch können mehrere Fächer gleichzeitig bzw. nacheinander entnommen werden. Insbesondere kann bei stillstehender Fördervorrichtung eine Vielzahl an Fächern entnommen werden. Sind die Fächer in diesem Serviceabschnitt entnommen, so kann die Fördervorrichtung wieder betätigt werden, um die nächsten Fächer in den Servicebereich zu fahren.

Sind die Fächer und gegebenenfalls auch der Innenraum gereinigt, so können die Fächer wieder eingesetzt werden. Auch dies erfolgt bevorzugt im Serviceabschnitt, in dem die Verbindungsleisten nach außen weggeschwenkt sind oder werden. Durch Bewegen der Führungsleisten im Serviceabschnitt nach innen können auch die Verbindungsleisten wieder nach innen gedrückt und von außen geführt werden, sodass die Hakenverbindungen zwischen den Führungsleisten und den Fächern geschlossen sind.

Das nach außen Bewegen der Verbindungsleisten kann auf unterschiedliche Arten erfolgen. Beispielsweise kann jede Verbindungsleiste über ein Schwenkgelenk mit dem Fördermittel der Fördervorrichtung verbunden sein. Alternativ kann auf ein Schwenkgelenk verzichtet werden, wenn das Fördermittel selbst eine gewisse Torsionsbeweglichkeit aufweist. Beispielsweise weisen Förderketten eine gewisse Beweglichkeit auf, die es ermöglicht, die einzelnen Kettenglieder gegenüber einander zu verdrehen. Diese Verdrehung geschieht bevorzugt als Torsionsbewegung, also eine Torsion um die Längserstreckung des Fördermittels. Das Schwenkgelenk oder die Torsionsbeweglichkeit können beispielsweise federnd ausgebildet sein, sodass die Verbindungsleisten selbsttätig nach innen gedrückt werden, um die Fächer zu halten. Beim Entfernen der Fächer können die Verbindungsleisten gegen diese Kraft bewegt werden, um die Fächer zu entnehmen.

Bevorzugt werden die Waffelblätter in einer industriellen Herstellungsanlage zur Herstellung von Waffelblättern gebacken und in weiterer Folge in einer Streichstation mit einer Cremeschicht versehen. Diese einseitig mit einer Cremeschicht versehenen Waffelblätter werden dann einer Kühlstation zugeführt.

Bevorzugt werden die gekühlten mit einer Creme versehenen Waffelblätter in weiterer Folge einer Stapelvorrichtung zugeführt, in der mehrere Waffelblätter und Cremeschichten schichtförmig übereinandergestapelt werden. In weiterer Folge können diese schichtförmig aufgebauten Blöcke zerschnitten und verpackt werden, um Backprodukte zu bilden.

Werden Waffelprodukte beispielsweise mit einem Überzug aus einem aushärtenden Überzug wie beispielsweise aus Schokolade versehen, so kann es vorteilhaft sein, die Backzwischenprodukte zu konditionieren und dadurch den Feuchtegehalt einzustellen.

Der Waffelblattförderer kann beispielsweise 50 bis 500, insbesondere 100 bis 300 Fächer umfassen.

Die Kühldauer beträgt je nach Anwendung beispielsweise 10 bis 30 Minuten, bevorzugt 15 bis 20 Minuten.

Die Konditionierdauer beträgt je nach Anwendung beispielsweise 15 bis 30 Minuten, bevorzugt etwa 20 Minuten.

Die Kühl- bzw. Konditionierstation kann beispielsweise eine Höhe von 2m bis 4m aufweisen. Die Kühl- bzw. Konditionierstation kann beispielsweise einen Durchsatz von 5 bis 30 Waffelblättern pro Minute aufweisen.

Gegebenenfalls können zwei Stationen oder mehr Stationen nacheinander angeordnet sein, sodass die Waffelblätter diese Stationen eine nach der anderen durchlaufen. Gegebenenfalls können mehrere erfindungsgemäße Stationen aneinandergereiht sein.

Gegebenenfalls kann einer erfindungsgemäßen Station eine herkömmliche Kühlstation nachgereiht werden. Beispielsweise können frisch gebildete, weiche Waffelblöcke in der erfindungsgemäßen Station schonend gekühlt werden, ohne dass sie im ersten Umlenkabschnitt gewendet werden. Wurden die Waffelblöcke jedoch in der erfindungsgemäßen Kühlstation auf eine gewisse Temperatur heruntergekühlt, so können sie gegebenenfalls in einer herkömmlichen Kühlstation weiter gekühlt werden. Die Waffelblöcke können auch in einer erfindungsgemäßen Konditionierstation konditioniert werden.

Die Waffelblätter sind bevorzugt unter Druck ausgebackene Flachwaffel- oder Hohlwaffelblätter aus einer im unausgebackenen Zustand mindestens 40% Wasser enthaltenden, flüssigen Backmasse. Die Waffelblätter weisen bevorzugt Abmessungen im Bereich von etwa 40cm x 80cm auf. Die Kerndicke der Waffelblätter beträgt beispielsweise etwa 1-3mm. Die Waffelblätter weisen eine poröse, knusprig-spröde Konsistenz auf.

Die Creme ist beispielsweise eine fetthaltige, essbare Creme, wie beispielsweise eine Haselnusscreme oder eine Schokoladencreme.

Die Erfindung wird in weiterer Folge anhand der Figuren weiter beschrieben.
**Fig. 1** zeigt eine schematische Schnittansicht einer möglichen Ausführungsform eines Waffelblattförderers.
**Fig. 2** zeigt eine Detailansicht eines oberen Abschnitts eines Waffelblattförderers.
**Fig. 3** zeigt eine schematische Aufsicht auf einen Abschnitt eines Waffelblattförderers.

Die **Figuren 4a** **und** **4b** zeigen Details des Waffelblattförderers im Bereich des Serviceabschnitts in zwei unterschiedlichen Stellungen.

Wenn nicht anders angegeben, so entsprechen die Bezugszeichen folgenden Komponenten:
Waffelblattförderer 1, Kühl- oder Konditionierstation 2, Fach 3, Verbindungsleiste 4, Nut 5, Hakenverbindung 6, Fördervorrichtung 7, Förderrichtung 8, Führungsleiste 9, Außenseite (der Verbindungsleiste) 10, Serviceabschnitt 11, Bewegungsvorrichtung 12, Fördermittel 13, Schwenkgelenk 14, erster Förderabschnitt 15, zweiter Förderabschnitt 16, erster Umlenkabschnitt 17, zweiter Umlenkabschnitt 18, Verschiebevorrichtung 19, Hakenelement 20, Kühl- oder Konditionierbereich 21.

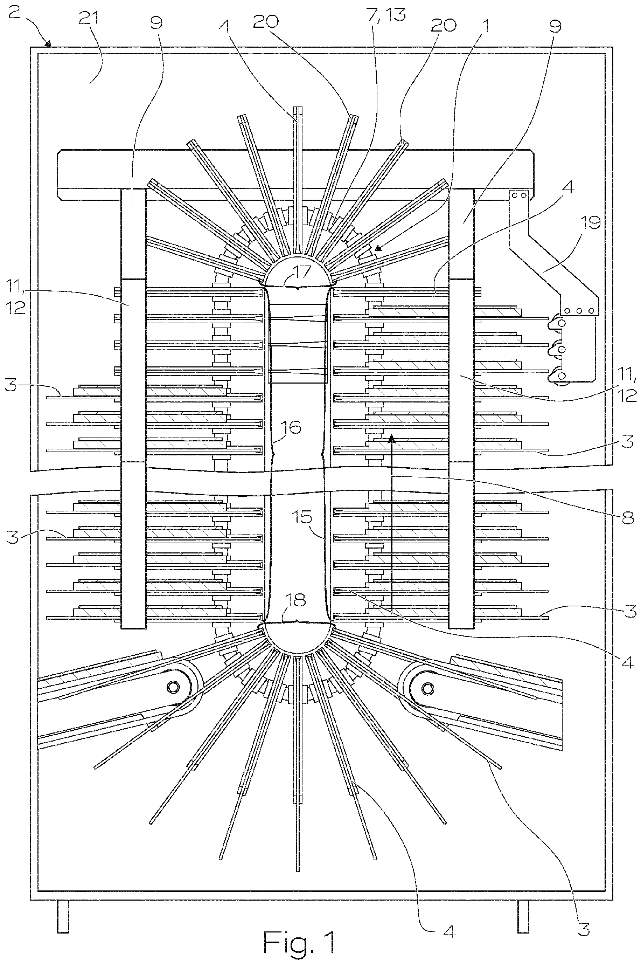

**Fig. 1** zeigt eine schematische Seitenansicht bzw. Schnittdarstellung einer möglichen Ausführungsform eines Waffelblattförderers 1 bzw. einer Kühl- oder Konditionierstation 2. Der Waffelblattförderer 1 umfasst mehrere Fächer 3, die von einer Fördervorrichtung 7 entlang einer Förderrichtung 8 transportiert werden. Die Förderrichtung 8 ist im vorliegenden Fall nur an einer Stelle der Fördervorrichtung 7 eingezeichnet. Die Förderrichtung 8 folgt im Wesentlichen dem Verlauf der Fördervorrichtung 7 bzw. dessen Fördermittel 13. Das Fördermittel 13 kann beispielsweise eine Förderkette oder ein Förderriemen sein. Insbesondere ist das Fördermittel 13 ein endloses Antriebsglied. Bevorzugt sind zwei derartiger Fördermittel 13 vorgesehen.

Die Fächer 3 sind bevorzugt über Verbindungsleisten 4 mit der Fördervorrichtung 7 gekoppelt. Die Verbindungsleisten 4 weisen bevorzugt Nuten 5 auf, in denen die Fächer 3 gehalten werden. Insbesondere sind die Verbindungsleisten 4 paarweise angeordnet und weisen nach innen weisende Nuten 5 zum Einstecken eines Fachs 3 auf.

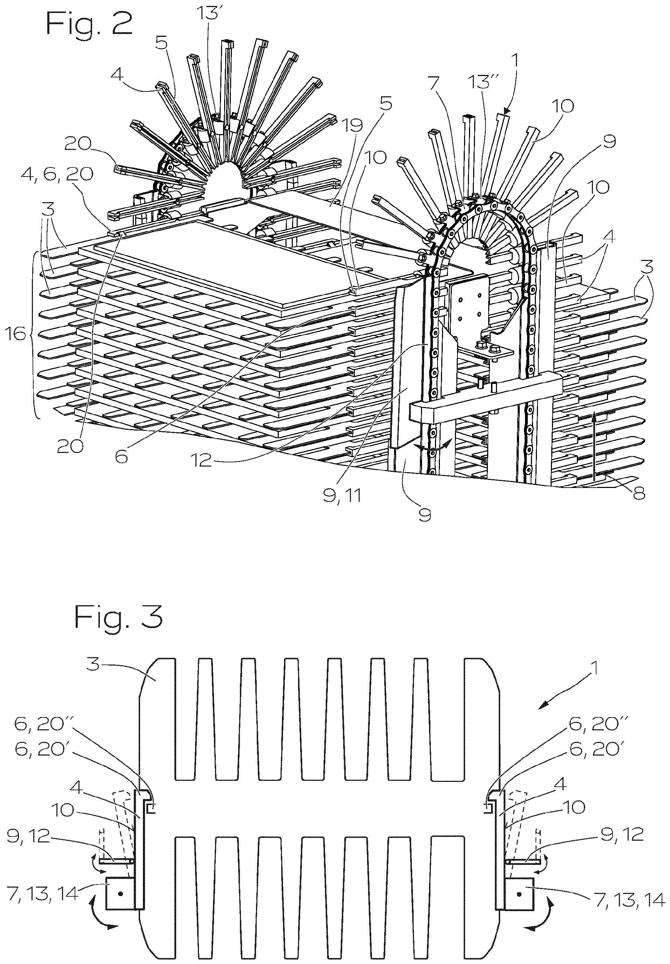

Der Waffelblattförderer 1 umfasst Führungsleisten 9. Diese Führungsleisten 9 sind dazu vorgesehen, die Verbindungsleisten 4 an ihren Außenseiten 10 (siehe Fig. 3) zu führen.

Die Führungsleisten 9 weisen bevorzugt in allen Ausführungsformen einen Serviceabschnitt 11 auf. In diesem Serviceabschnitt 11 kann ein Abschnitt der Führungsleiste 9 oder die gesamte Führungsleiste 9 über eine Bewegungsvorrichtung 12 bewegt und insbesondere weggeklappt werden. Die Funktion wird anhand der nachfolgenden Figuren beschrieben.

In der vorliegenden Ausführungsform umfasst der Waffelblattförderer 1 einen ersten Förderabschnitt 15, einen zweiten Förderabschnitt 16, einen ersten Umlenkabschnitt 17 und einen zweiten Umlenkabschnitt 18.

Im ersten Förderabschnitt 15 und im zweiten Förderabschnitt 16 werden die Fächer 3 im Wesentlichen parallel zueinander und beabstandet geradlinig befördert. Insbesondere werden die Fächer 3 bei der vorliegenden Ausführungsform bzw. Darstellung im ersten Förderabschnitt 15 vertikal nach oben und im zweiten Förderabschnitt 16 vertikal nach unten befördert. In den Umlenkabschnitten 17, 18 werden die Verbindungsleisten 4 umgelenkt und insbesondere um 180° geschwenkt. Der Grund für das Schwenken der Verbindungsleisten 4 in den Umlenkabschnitten 17, 18 ist, dass die Führungsleisten 9 an einem Endlosförderer wie beispielsweise einer Förderkette oder einem Förderriemen angebracht sind, der in gewissen Bereichen umgelenkt werden muss, um zur Ausgangsposition zurückzukehren.

In der vorliegenden Ausführungsform ist eine Verschiebevorrichtung 19 vorgesehen. Diese Verschiebevorrichtung 19 verschiebt die Fächer 3 vom ersten Förderabschnitt 15 in den zweiten Förderabschnitt 16, bevor diese den nach dem ersten Förderabschnitt 15 angeordneten ersten Umlenkabschnitt 17 passieren. Dadurch kann ein Umklappen der Fächer 3 verhindert werden. Dies ist beispielsweise dann wichtig, wenn die transportierten Waffelblätter auf ihrer Oberseite mit einer Creme versehen sind. Durch Umklappen würde dann die Cremeschicht um 180° gewendet werden und das benachbarte Fach 3 verschmutzen. Die Verschiebevorrichtung 19 schiebt die Fächer 3 im Wesentlichen parallel und waagrecht unter Umgehung des Umlenkabschnittes 17 in den zweiten Förderabschnitt 16 sodass die Waffelblätter nicht gewendet werden.

Alternativ kann eine Verschiebevorrichtung 19 aber auch entfallen. Dies beispielsweise dann, wenn es sich um eine Kühl- oder Konditionierstation 2 für Waffelblöcke oder Waffeln handelt, die beidseitig aufliegen können.

Die vorliegende Ausführungsform ist als Kühl- oder Konditionierstation 2 ausgebildet. Denkbar ist es, die vorliegende Vorrichtung in einem Puffersystem oder in einer Pufferstation vorzusehen. Sie weist bevorzugt ein Gehäuse auf, in dem ein Kühl- oder Konditionierbereich 21 vorgesehen ist. Die Übergabe der Waffelblätter erfolgt bevorzugt über ein Förderband bzw. über einen Riemenförderer, von dem die - gegebenenfalls zu einem Waffelblock gestapelten - Blätter auf den einzelnen Fächern 3 abgenommen werden. Die Waffelblätter sind bevorzugt zu einem Waffelblock zusammengesetzt. Somit kann eine Übergabe von Waffelblöcken erfolgen.

**Fig. 2** zeigt eine detailliertere Schrägansicht von maßgeblichen Komponenten eines Waffelblattförderers 1. Der Waffelblattförderer 1 umfasst eine Vielzahl von Fächern 3. Die Fächer 3 sind in der vorliegenden Ausführungsform unterbrochen ausgebildet und weisen fingerförmige Fortsätze auf. Diese fingerförmigen Fortsätze erleichtern beispielsweise die Abnahme der Waffelblätter von einem Riemenförderer, der diese zuführt. Zudem kann durch diese Ausgestaltung eine effektivere Kühlung oder Konditionierung erfolgen. Die Fächer 3 sind über Verbindungsleisten 4 mit der Fördervorrichtung 7 gekoppelt. Die Fördervorrichtung 7 umfasst in dieser Ausführungsform zwei Fördermittel 13', 13", die beispielsweise als Förderketten ausgebildet sind. Die Verbindungsleisten 4 weisen jeweils eine Nut 5 auf, in die ein Fach 3 eingesteckt werden kann. Insbesondere sind die Verbindungsleisten 4 paarweise angeordnet und weisen jeweils eine nach innen gerichtete Nut 5 auf. Dadurch kann ein Fach 3 beidseitig von je einer Verbindungsleiste 4 mit je einer Nut 5 gehalten werden. Um ein Herausfallen oder ein Herausziehen des Fachs 3 aus dieser Nut 5 bzw. aus der Verbindungsleiste 4 zu verhindern, kann eine Hakenverbindung 6 vorgesehen sein. Bei der Bewegung der Verbindungsleisten 4 entlang der Förderrichtung 8 werden die Verbindungsleisten 4 an ihren Außenseiten 10 von außen durch Führungsleisten 9 geführt. Dadurch wird verhindert, dass die Verbindungsleisten 4 nach außen ausweichen können.

Die Führungsleisten 9 umfassen bevorzugt einen Serviceabschnitt 11. In der vorliegenden Ausführungsform ist der Serviceabschnitt 11 bei einer Führungsleiste 9 vorgesehen. Bevorzugt sind beidseitig, also beidseitig eines Fachs 3, jeweils ein Serviceabschnitt 11 vorgesehen, durch den beide Führungsleisten 9 in diesem Bereich nach außen geklappt werden können.

Der Serviceabschnitt 11 kann in allen Ausführungsformen in einem beliebigen bzw. in einem vorteilhaften Bereich des Waffelblattförderers 1 angeordnet werden. Insbesondere kann ein vorteilhafter Bereich die Arbeitshöhe eines Menschen sein. Die Serviceabschnitte 11 können auf einer Seite des Waffelblattförderers 1 oder beidseitig vorgesehen sein.

In der vorliegenden Ausführungsform ist der Serviceabschnitt 11 im oberen Bereich des Waffelblattförderers 1 vorgesehen. Bevorzugt soll der der Serviceabschnitt 11 aber in einem unteren Bereich des Waffelblattförderers 1 angeordnet sein, sodass der Serviceabschnitt 11 im Arbeitsbereich einer Bedienperson positioniert ist.

Gegebenenfalls können auch mehrere Serviceabschnitte 11 vorgesehen sein. Es ist eine Bewegungsvorrichtung 12 vorgesehen, die ein werkzeugloses nach außen Bewegen der Führungsleiste 9 im Serviceabschnitt 11 ermöglicht. Durch dieses nach außen Bewegen der Führungsleiste 9 im Serviceabschnitt 11 wird die Führung der Verbindungsleisten 4 an ihrer Außenseite 10 entfernt bzw. aufgehoben und die Führungsleisten 9 können nach außen bewegt werden. Dadurch kann in diesem Bereich die Hakenverbindung 6 gelöst werden.

Die in Fig. 2 dargestellte Ausführungsform umfasst ebenfalls eine Verschiebevorrichtung 19. Eine derartige Verschiebevorrichtung 19 kann in einer alternativen Ausführungsform jedoch auch entfallen, sodass die Fächer 3 auch im oberen Bereich in den Verbindungsleisten 4 verbleiben. In der vorliegenden Ausführungsform der Fig. 2 werden die Fächer 3 hingegen vor dem Umlenkabschnitt 17 von dem ersten Förderabschnitt 15 in den zweiten Förderabschnitt 16 verschoben.

**Fig. 3** zeigt eine schematische Aufsicht auf Komponenten des Waffelblattförderers 1. Das Fach 3 umfasst gegebenenfalls, wie dargestellt, fingerförmige Fortsätze. Auf dem Fach 3 kann beispielsweise ein Waffelblatt transportiert werden, wie es beispielsweise in den Fig. 1 und 2 dargestellt ist.

Das Fach 3 ist über zwei paarweise angeordnete Verbindungsleisten 4 mit der Fördervorrichtung 7 bzw. dessen Fördermittel 13 gekoppelt. Die Ansicht der Fig.3 verläuft im Wesentlichen entlang der Förderrichtung 8 im ersten Förderabschnitt 15.

Um ein Trennen des Fachs 3 von der Verbindungsleiste 4, beispielsweise im unteren Umlenkabschnitt 18, zu verhindern, ist eine Hakenverbindung 6 vorgesehen. Diese Hakenverbindung 6 umfasst zwei Hakenelemente 20' und 20". Beispielsweise ist ein Hakenelement 20' an der Verbindungsleiste 4 vorgesehen und das andere Hakenelement 20" an dem Fach 3.

Das Hakenelement 20" des Fachs 3 kann beispielsweise am seitlichen Rand mittig am Fach 3 angebracht bzw. vorgesehen sein.

Dieses Hakenelement 20" des Fachs 3 kann beispielsweise ein aufgebogener Abschnitt oder Fortsatz des Fachs 3 sein. Gegebenenfalls kann dieses Hakenelement 20" ein aus der Fläche des Fachs 3 ragender Stift sein. Grundsätzlich kann hier jegliche Form eines Hakenelements 20" eingesetzt werden, das eine Verhakung bzw. eine formschlüssige Verbindung in der Hakenverbindung 6 ermöglicht.

Die Hakenverbindungen 6 und deren Hakenelemente 20`, 20" können insbesondere derart ausgestaltet sind, dass sie in ihrer verhakten Stellung ein Entfernen der Fächer 3 nach außen verhindern aber ein Verschieben der Fächer 3 von einem Förderabschnitt zum anderen erlauben. Die Hakenverbindungen 6 wirken dabei also gegebenenfalls als Anschlag, der ein Ausziehen der Fächer 3 nach außen verhindert, aber eine Verschiebung nach innen zulässt. Diese Funktion ist insbesondere bei Anwendungen vorteilhaft, bei denen die Fächer entlang der Verbindungsleisten 4 verschoben werden. Bei anderen Anwendungen können die Hakenverbindungen 6 derart ausgestaltet sein, dass sie eine Verschiebung der Verbindungsleisten Fächer 3 entlang der Verbindungsleisten 4 verhindern.

Die Verbindungsleisten 4 werden bevorzugt durch Führungsleisten 9 an ihren Außenseiten 10 geführt. Dadurch wird ein Bewegen der Verbindungsleisten 4 nach außen verhindert. Im Serviceabschnitt 11, der in der Fig. 3 dargestellt ist, kann zumindest ein Teil der Führungsleiste 9 über eine Bewegungsvorrichtung 12 nach außen bewegt und insbesondere nach außen geschwenkt werden. Dadurch wird die seitliche Führung der Verbindungsleisten 4 aufgehoben und die Verbindungsleisten 4 können in diesem Bereich nach außen wegbewegt und insbesondere weggeschwenkt werden. Diese nach außen bewegte bzw. geschwenkte Stellung ist strichliert dargestellt. Durch das nach außen Bewegen der Verbindungsleisten 4 können die Hakenelemente 20', 20" der Hakenverbindungen 6 voneinander getrennt werden und die Fächer 3 können entfernt bzw. aus den Verbindungsleisten 4 herausgezogen werden.

In der vorliegenden Ausführungsform ist ein Schwenkgelenk 14 vorgesehen, über das die Verbindungsleisten 4 mit dem Fördermittel 13 gekoppelt sind. Gegebenenfalls kann jedoch auch das Fördermittel 13 selbst eine gewisse Torsionsbeweglichkeit aufweisen, die ein nach außen Bewegen der Verbindungsleisten 4 ermöglicht.

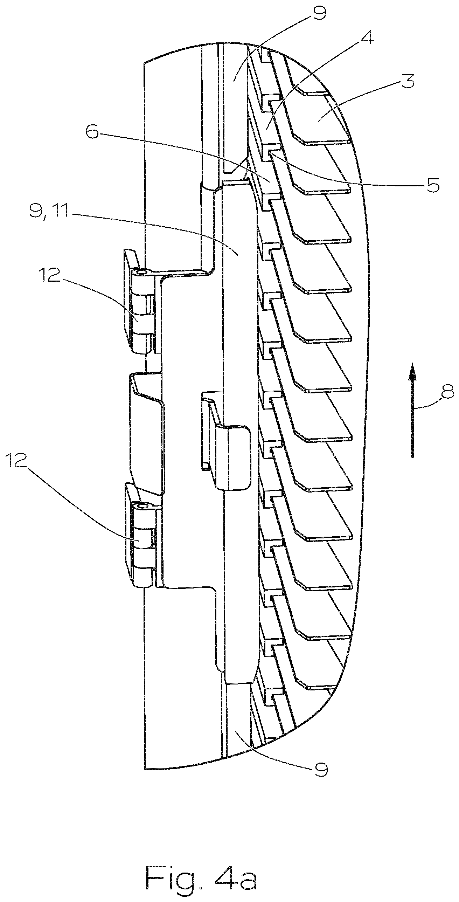

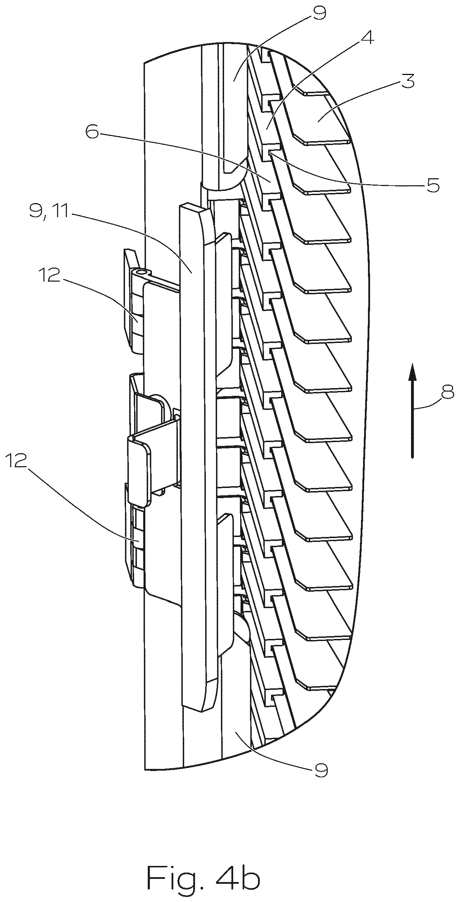

Die **Figuren 4a** **und** **4b** zeigen Details des Waffelblattförderers 1 im Bereich des Serviceabschnitts 11. Der Waffelblattförderer 1 umfasst, wie beispielsweise auch in Fig. 2 dargestellt, mehrere Fächer 3, die in Nuten 5 von Verbindungsleisten 4 gehalten werden. Um ein Herausziehen oder Herausfallen der Fächer 3 entlang der Nuten 5 zu verhindern, sind Hakenverbindungen 6 vorgesehen. Die Verbindungsleisten 4 werden an ihrer Außenseite 10 von Führungsleisten 9 geführt. Dies verhindert, dass die Verbindungsleisten 4 nach außen ausweichen können und dadurch die Hakenverbindungen 6 gelöst werden.

In einem Serviceabschnitt 11 ist eine Bewegungsvorrichtung 12 vorgesehen. Diese erlaubt es, einen Abschnitt der Führungsleisten 9, nämlich den Serviceabschnitt 11, nach außen zu bewegen. In der vorliegenden Ausführungsform ist die Bewegungsvorrichtung 12 als einfache Scharnieranordnung ausgebildet. Dadurch kann der Serviceabschnitt 11 der Führungsleiste 9 nach außen geschwenkt werden und die Fächer 3 somit zur Entnahme freigeben.

In Fig. 4a befindet sich der Serviceabschnitt 11 der Führungsleisten 9 in der nach innen geklappten Stellung. In dieser werden die Verbindungsleisten 4 von den Führungsleisten 9 im Wesentlichen durchgehend von außen geführt.

In Fig. 4b ist die nach außen geklappte Stellung des Serviceabschnitts 11 der Führungsleisten 9 dargestellt. Im Serviceabschnitt 11 werden die Verbindungsleisten 4 nicht von außen geführt. In dieser Stellung können die Verbindungsleisten 4 nach außen bewegt werden, um die Hakenverbindungen 6 zu lösen. Dadurch können die Fächer 3 im Serviceabschnitt 11 einfach entnommen werden.

In allen Ausführungsformen ist bevorzugt vorgesehen, dass der Serviceabschnitt 11 in einem durch eine Serviceperson gut zugänglichen Bereich angeordnet ist.

## Patentansprüche

1. **Waffelblattförderer** (1) zum Transport von gegebenenfalls zu Waffelblöcken zusammengesetzten Waffelblättern durch eine Kühl- oder Konditionierstation (2) einer Anlage zur Herstellung von Waffelprodukten, umfassend:
- mehrere Fächer (3) zur Aufnahme bzw. Anlage und zum Transport der Waffelblätter,
- mehrere, insbesondere paarweise angeordnete, Verbindungsleisten (4) mit nach innen weisenden Nuten (5) zur Halterung der Fächer (3) und mit lösbaren Hakenverbindungen (6), die die Fächer (3) vor einem Herausziehen oder Herausfallen aus den Nuten (5) schützen,
- eine Fördervorrichtung (7), die die Verbindungsleisten (4) und die in die Verbindungsleisten (4) eingesteckten Fächer (3) entlang einer Förderrichtung (8) und insbesondere entlang einer geschlossenen Kontur bewegt,
- und Führungsleisten (9), die die Verbindungsleisten (4) an deren Außenseiten (10) entlang der Förderrichtung (8) derart führen, dass der Bewegungsspielraum der Verbindungsleisten (4) nach außen durch die Führungsleisten (9), und bevorzugt nach innen durch die eingesteckten Fächer (3), eingeschränkt ist, **dadurch gekennzeichnet,**
- **dass** mindestens eine der Führungsleisten (9) einen Serviceabschnitt (11) aufweist, der über eine Bewegungsvorrichtung (12) derart nach außen bewegt und insbesondere weggeklappt werden kann, dass eine Bewegung der in diesem Bereich positionierten Verbindungsleisten (4) nach außen freigegeben und dadurch ein Lösen der Hakenverbindung (6) und eine Entnahme des Fachs (3) ermöglicht ist.

2. Waffelblattförderer (1) nach Anspruch 1, **dadurch gekennzeichnet,**
- **dass** die Bewegungsvorrichtung (12) und die Hakenverbindung (6)werkzeuglos betätigbare Vorrichtungen zur werkzeuglosen Entnahme der Fächer (3) sind.

3. Waffelblattförderer (1) nach Anspruch 1 oder 2, **dadurch gekennzeichnet,**
- **dass** entlang der Fördervorrichtung (7) bzw. entlang deren Bewegungsrichtung nacheinander eine Vielzahl an paarweise angeordneten Verbindungsleisten (4) mit nach innen weisenden Nuten (5) zur beidseitigen Halterung der Fächer (3) vorgesehen sind,
- und **dass** sich der Serviceabschnitt (11) entlang der Bewegungsrichtung über mehrere Paare von Verbindungsleisten (4) erstreckt und dadurch das Lösen der Hakenverbindungen (6) mehrerer Fächer (3) bei stillstehender Fördervorrichtung (7) ermöglicht.

4. Waffelblattförderer (1) nach einem der Ansprüche 1 bis 3, **dadurch gekennzeichnet,**
- **dass** die Fördervorrichtung (7) zwei parallel zueinander verlaufende und angetriebene endlose Fördermittel (13', 13") wie beispielsweise Förderketten oder Förderriemen umfasst,
- und **dass** die eine Verbindungsleiste (4) eines Paars von Verbindungsleisten (4) zur Halterung eines Fachs (3) an dem einen Fördermittel (13`) und die andere Verbindungsleiste (4) des Paars von Verbindungsleisten (4) an dem anderen Fördermittel (13") angebracht ist.

5. Waffelblattförderer (1) nach einem der Ansprüche 1 bis 4, **dadurch gekennzeichnet,**
- **dass** die Verbindungsleisten (4), zur Ermöglichung der Lösung der Hakenverbindungen (6) durch die Bewegung der Verbindungsleisten (4) nach außen, über ein Schwenkgelenk (14) mit der Fördervorrichtung (7) oder deren Fördermittel (13) gekoppelt ist,
- oder dass die Fördervorrichtung (7) oder deren Fördermittel (13), an dem die Verbindungsleisten (4) angebracht sind, zur Ermöglichung der Lösung der Hakenverbindungen (6) durch die Bewegung der Verbindungsleisten (4) nach außen, torsionsbeweglich ausgebildet sind,
- insbesondere dass die Schwenk- bzw. Torsionsachse, um die die Verbindungsleisten (4) verschwenkt werden können, parallel zur Förderrichtung (8) verläuft.

6. Waffelblattförderer (1) nach einem der Ansprüche 1 bis 5, **dadurch gekennzeichnet,**
- **dass** die Fördervorrichtung (7) einen ersten Förderabschnitt (15) aufweist, in dem die Verbindungsleisten (4) im Wesentlichen parallel und beabstandet übereinander aufwärts befördert werden und die Förderrichtung (8) im Wesentlichen senkrecht verläuft,
- **dass** die Fördervorrichtung (7) einen zweiten Förderabschnitt (16) aufweist, in dem die Verbindungsleisten (4) im Wesentlichen parallel und beabstandet übereinander abwärts befördert werden und die Förderrichtung (8) im Wesentlichen senkrecht verläuft,
- **dass** die Fördervorrichtung (7) einen ersten Umlenkabschnitt (17) aufweist, in dem die Verbindungsleisten (4) von dem ersten Förderabschnitt (15) auf den zweiten Förderabschnitt (16) umgelenkt werden,
- **dass** die Fördervorrichtung (7) einen zweiten Umlenkabschnitt (18) aufweist, in dem die Verbindungsleisten (4) von dem zweiten Förderabschnitt (16) wieder auf den ersten Förderabschnitt (15) umgelenkt werden,
- und **dass** der Serviceabschnitt (11) bevorzugt im ersten Förderabschnitt (15) und/oder im zweiten Förderabschnitt (16) vorgesehen ist.

7. Waffelblattförderer (1) nach Anspruch 6, **dadurch gekennzeichnet, dass** eine Verschiebevorrichtung (19) vorgesehen ist, die die Fächer (3) entlang der Nuten (5) der Verbindungsleisten (4) und quer zur Förderrichtung (8) von einem Förderabschnitt der Fördervorrichtung (7), insbesondere vom ersten Förderabschnitt (15) zum anderen Förderabschnitt, insbesondere in den zweiten Förderabschnitt (16) verschiebt.

8. Waffelblattförderer (1) nach Anspruch 7, **dadurch gekennzeichnet, dass** die Hakenverbindungen (6) derart ausgestaltet sind, dass sie in ihrer verhakten Stellung ein Entfernen der Fächer (3) nach außen verhindern aber ein Verschieben der Fächer (3) von einem Förderabschnitt zum anderen erlauben.

9. Waffelblattförderer (1) nach einem der Ansprüche 1 bis 8, **dadurch gekennzeichnet,**
- **dass** die Hakenverbindungen (6) je zwei Hakenenlemente (20`,20") umfassen, die durch Relativbewegung entlang einer Hakenrichtung miteinander verhakt oder gelöst werden können, wobei ein Hakenenlement (20`) einer Hakenverbindung (6) am Fach (3) und das andere Hakenenlement (20") derselben Hakenverbindung (6) an jener Verbindungsleiste (4) vorgesehen ist, in dessen Nut (5) das entsprechende Fach (3) eingesteckt ist,
- und/oder dass pro Fach (3) zwei Hakenverbindungen (6) vorgesehen sind, wobei die beiden Hakenverbindungen (6) eines Fachs (3) im Bereich der Verbindungsleisten (4) vorgesehen sind, in deren Nuten (5) das entsprechende Fach (3) eingesteckt ist.

10. **Kühl- oder Konditionierstation** (2) einer Anlage zur Herstellung von Waffelprodukten, umfassend einen Kühl- oder Konditionierbereich (21) und einen Waffelblattförderer (1), der Waffelblätter durch den Kühl- oder Konditionierbereich (21) befördert, **dadurch gekennzeichnet, dass** der Waffelblattförderer (1) nach einem der Ansprüche 1 bis 9 ausgebildet ist.

11. **Führungsleistenanordnung** für einen Waffelblattförderer (1) nach einem der Ansprüche 1 bis 9, umfassend die Führungsleisten (9) mit dem Serviceabschnitt (11) und die Bewegungsvorrichtung (12).

12. **Verfahren** zum Betrieb und insbesondere zur Entnahme von Fächern (3) eines Waffelblattförderers (1) nach einem der Ansprüche 1 bis 9, umfassend folgende Schritte:
- nach außen Bewegen und insbesondere wegklappen mindestens einer der Führungsleisten (9) in dem Serviceabschnitt (11), sodass eine Bewegung der in diesem Bereich positionierten Verbindungsleisten (4) nach außen freigegeben wird,
- Lösen der Hakenverbindung (6) durch nach außen Bewegen mindestens einer Verbindungsleiste (4),
- und Entnahme des Fachs (3).

13. Verfahren nach Anspruch 12, **dadurch gekennzeichnet,**
- **dass** die Fördervorrichtung (7) zuerst angehalten wird,
- und anschließend alljene Fächer (3) bei stillstehender Fördervorrichtung (7) entnommen werden, die sich im Serviceabschnitt (11) befinden.

14. **Verfahren** zum Nachrüsten eines Waffelblattförderers (1) zum Transport von gegebenenfalls zu Waffelblöcken zusammengesetzten Waffelblättern durch eine Kühl- oder Konditionierstation (2) einer Anlage zur Herstellung von Waffelprodukten, wobei der Waffelblattförderer (1) umfasst:
- mehrere Fächer (3) zur Aufnahme bzw. Anlage und zum Transport der Waffelblätter,
- mehrere paarweise angeordnete Verbindungsleisten (4) mit nach innen weisenden Nuten (5) zur beidseitigen Halterung der Fächer (3) und mit lösbaren Hakenverbindungen (6), die die Fächer (3) vor einem Herausziehen oder Herausfallen aus den Nuten (5) schützen,
- eine Fördervorrichtung (7), die die Verbindungsleisten (4) und die in die Verbindungsleisten (4) eingesteckten Fächer (3) entlang einer Förderrichtung (8) und insbesondere entlang einer geschlossenen Kontur bewegt,
- und Führungsleisten (9), die die Verbindungsleisten (4) an deren Außenseiten (10) entlang der Förderrichtung (8) derart führen, dass der Bewegungsspielraum der Verbindungsleisten (4) nach außen durch die Führungsleisten (9), und bevorzugt nach innen durch die eingesteckten Fächer (3), eingeschränkt ist, **dadurch gekennzeichnet,**
- **dass** mindestens eine der Führungsleisten (9) mit einen Serviceabschnitt (11) versehen wird, der über eine Bewegungsvorrichtung (12) derart nach außen bewegt und insbesondere weggeklappt werden kann, dass eine Bewegung der in diesem Bereich positionierten Verbindungsleisten (4) nach außen freigegeben und dadurch ein Lösen der Hakenverbindung (6) und eine Entnahme des Fachs (3) ermöglicht ist.
